# EUROPÄISCHE PATENTSCHRIFT

(11) **EP 0 896 453 B1**
(45) Veröffentlichungstag und Bekanntmachung des Hinweises auf die Patenterteilung: **19.10.2005**
(21) Anmeldenummer: 98113474.5
(22) Anmeldetag: 20.07.1998
(51) Int. Cl.: H04L 9/18

(54) **Verfahren zum Verschlüsseln bzw. Entschlüsseln einer Datenfolge**
Method for encrypting or decrypting a data stream
Procédé de chiffrage ou de déchiffrage d'une séquence de données

(30) Priorität: 05.08.1997 DE 19733829
(43) Veröffentlichungstag der Anmeldung: 10.02.1999
(73) Patentinhaber: Micronas GmbH, 79108 Freiburg (DE)
(72) Erfinder: Menkhoff, Andreas, Dr., 81927 München (DE); Witte, Franz-Otto, Dr. Ing., 79312 Emmendingen (DE)
(74) Vertreter: Patentanwälte Westphal, Mussgnug & Partner

(56) Entgegenhaltungen:
- SCHNEIER, BRUCE: "Applied Cryptography" 1996 , JOHN WILEY & SONS, INC. , USA XP002148994 ISBN: 0-471-12845-7 * Seite 397 - Seite 398 * * Seite 420 *
- SHAHEEN K M: "CODE BOOK CIPHER SYSTEM" PROCEEDINGS OF THE ANNUAL INTERNATIONAL CARNAHAN CONFERENCE ON SECURITY TECHNOLOGY,US,NEW YORK, IEEE, Bd. CONF. 28, 12. Oktober 1994 (1994-10-12), Seiten 66-71, XP000492104 ISBN: 0-7803-1925-7
- KNUTH D. E. : "THE ART OF COMPUTER PROGRAMMING. Volume 2 /SEMINUMERICAL ALGORITHMS. " 1980 , ADDISON WESLEY , USA; XP000951421 * Seite 31 - Seite 32 *
- MIHALJEVIC M ET AL: "A FAST AND SECURE STREAM CIPHER BASED ON CELLULAR AUTOMATA OVER GF (Q)" IEEE GLOBAL TELECOMMUNICATIONS CONFERENCE,US,NEW YORK, NY: IEEE, 1998, Seiten 3250-3255, XP000805240 ISBN: 0-7803-4985-7

## Beschreibung

Die Erfindung betrifft ein Verfahren zum Verschlüsseln bzw. Entschlüsseln einer Datenfolge von aufeinanderfolgenden Datenworten der Länge M in einer Datenübertragungseinrichtung.

Aus Bernhard Sklar, Digital communicatinns, Prentice-Hall, Englewood Cliffs, New Jersey, 1988, Seite 290 ff. ist ein Verschlüsselungsverfahren bekannt, bei dem die Codierung mittels eines Schieberegisters vorgenommen wird. Dieses Verfahren hat den Nachteil, daß der Verschlüsselungscode leicht aufgefunden werden kann und somit die codierten Daten leicht entschlüsselt werden können.

Weitere Verschlüsselungsverfahren sind aus SCHNEIER, BRUCE: "Applied Cryptography 1996, JOHN WILEY & SONS. INC., USA, XPO02148994 ISBN: 0-471-12845-7 und SHAHEEN K M: "CODE BOOK CIPHER SYSTEM" PROCEEDINGS OF THE ANNUAL INTERNATIONAL CARNAHAN CONFERENCE ON SECURITY TECHNOLOGY.US,NEW YORK, IEEE, Bd. CONF. 28, 12. Oktober 1994 (1994-10-12), Saiten 66-71, XP000492104 ISBN: 0-7803-1925-7 bekannt.

Ferner ist aus der Praxis der sogenannte RC 4-Algorithmus bekannt. Bei diesem werden durch verschiedene arithmetische Operationen quasi zufällige Verschlüsselungsworte erzeugt. Dieser Algorithmus hat den Nachteil, daß für eine gute Verschlüsselung viel Speicherplatz erforderlich ist.

Der Erfindung liegt die Aufgabe zugrunde, ein Verfahren zum Verschlüsseln bzw. Entschlüsseln einer Datenfolge zu schaffen, das schwer zu entschlüsseln ist und nicht zu viel Speicherplatz benötigt und mit wenig Aufwand auf Silizium realisierbar ist.

Diese Aufgabe wird durch ein Verfahren mit den Merkmalen des Anspruchs 1 gelöst.

Dadurch, daß bei dem Algorithmus Operationen in einem endlichen Körper, der auch Galois-Peld oder Galois-Kölper genannt wird, ausgeführt werden und dabei quasi zufällige Verschlüsselungsworte erzeugt werden, weist die Datenfolge eine hohe Sicherheit gegenüber einer Entschlüsselung bei nicht bekanntem Schlüssel auf. Einerseits kann von der Datenfolge selbst nicht auf den Schlüssel geschlossen werden, da die Verschlüsselungsworte quasi zufällig erzeugt worden sind. Selbst wenn der Algorithmus bekannt ist, kann der Schlüssel nicht mit verwertbarem Aufwand aufgrund der verschlüsselten Datenworte bestimmt werden. Andererseits ist das Verfahren aufgrund der Verwendung endlichen Körper der Arithmetik auch Galois-Arithmetik genannt, durch eine Hardware auf einem Prozessor realisierbar. Es können somit vorgegebene Hardware-Bausteine, beispielsweise die eines Reed-Solomon-Decoders verwendet werden. Da vorgegebene Hardware-Bausteine verwendet werden können, kann der Aufwand für die Datenübertragungseinrichtung gering gehalten werden. Ferner kann Speicherplatz wiederverwendet, d.h. für andere Aufgaben benutzt werden. Ein Anwendungsbeispiel für eine Datenübertragungseinrichtung ist eine Rundfunksende- oder eine Rundfunkempfangsstation.

Es ist günstig, wenn die Länge M der Datenworte gleich der Dimension N des endlichen Körpers ist. Dadurch kann der Algorithmus durch einfache Operationen ausgeführt werden. Erfindungsgemäß ist vorgesehen, dass der Algorithmus auf einem endlichen Körper von R. Zustandsvariablen x und R konstanten, vorgegebenen Faktoren p basiert, die durch L Indices adressiert werden, wobei 1 kleiner als R ist Günstigerweise wird der Algorithmus zyklisch durchlaufen, wobei pro Zyklus ein Verschlüsselungswort erzeugt wird. Durch die Kombination von Zustandsvariablen und konstanten vorgegebenen Faktoren wird eine genügend hohe Zufälligkeit der Verschlüsselungsworte erreicht und andererseits Speicherplatz gespart.

Gemäß einem bevorzugten Ausführungsbeispiel der Erfindung ist L = 3, und es werden drei Zustandsvariablen x durch die drei Indices quasi zufällig ausgewählt, das Verschlüsselungswort durch eine Verknüpfung der ausgewählten Zustandsvariablen x gebildet und nur zur Verknüpfung mit dem jeweiligen Datenwort verwendet. Da die Zustandsvariablen im Verfahren nicht weiter verwendet und somit auch nicht gespeichert werden, sind Rückverfolgungsverfahren nicht effektiv zur Auffindung der

Vorteilhafterweise können zwei der Zustandsvariablen dadurch ausgewählt werden, daß sie miteinander vertauscht und anschließend mit duch die Indices der Zustandsvariablen x(i) gegebenen konstanten Faktoren p(i) multipliziert werden. Dabei werden pro Zyklus aufgrund der Galois-Arithmetik unterschiedliche der vorgegebenen konstanten Faktoren p(i) quasi zufällig ausgewählt.

Gemäß einem bevorzugten Ausführungsbeispiel der Erfindung ergibt sich die Folge der Indices durch Durchlaufen und Weiterschalten eines rückgekoppelten Schieberegisters mit maximaler Zykluslänge. Hierbei wird auf einfache Weise eine quasi statistische Folge von Indices erzeugt. Die Anzahl der Indices i zur Adressierung der Zustandsvariablen x(i) kann durch eine Modulo-Operation auf die für die Adressierung vorgegebene Anzahl begrenzt werden. Hierdurch wird ein quasi zufälliges Rauschen erzeugt, so daß die Indices i, die zur Adressierung der Zustandsvariablen verwendet werden, quasi statistisch gleichverteilt sind.

Gemäß einer vorteilhaften Weiterbildung der Erfindung werden die Startwerte für die Zustandsvariablen x und die Indices i für den Algorithmus mittels eines Initialisierungsverfahrens eindeutig bestimmt. Günstigerweise werden die Startwerte durch Operationen in einem endlichen Körper GF (2^{Q}) aus vorgegebenen Initialisierungswerten k quasi zufällig erzeugt. Hierdurch werden bereits quasi zufällige Startwerte in den Algorithmus eingegeben, so daß die Wahrscheinlichkeit, daß aus den verschlüsselten Datenworten auf den Schlüssel geschlossen werden kann bzw. die Datenworte ohne Kenntnis der Eingangswerte entschlüsselbar sind, weiter reduziert wird.

Die Initialisierungswerte k können gleichgewichtet in die Operationen zur Ermittlung der Startwerte eingehen. Hierdurch wird gewährleistet, daß in der Ausgangsverteilung der Startwerte keine statistische ungleiche Verteilung auftritt, durch welche das Verschlüsselungsverfahren leichter angreifbar wäre. Zum Bestimmen der Startwerte für die Zustandsvariablen x kann jeweils eine Multiplikation mit einem der konstanten Faktoren p(i) durchgeführt werden. Die Startwerte der Indices i können jeweils durch Verknüpfung von gleichgewichteten Initialisierungswerten k mit einer Zustandsvariablen x bzw. mit einem der konstanten Faktoren p (i) verknüpft werden. Die Startwerte der Indices können jeweils durch eine Modulo-Operation auf die für den Algorithmus vorgegebene Anzahl begrenzt werden.

Im folgenden wird die Erfindung anhand der Zeichnung näher erläutert.

Es zeigen:
Fig. 1 ein Flußdiagramm, das einen erfindungsgemäßen Algorithmus zur Bestimmung von Verschlüsselungsworten darstellt,
Fig. 2 ein Flußdiagramm, das ein Initialisierungsverfahren zeigt, mit dem gemäß der Erfindung Startwerte für den Algorithmus aus Fig.1 bestimmt werden,
Fig. 3 eine Vorrichtung, in der das erfindungsgemäße Verfahren zum Verschlüsseln einer Datenfolge angewendet wird und
Fig. 4 eine Vorrichtung, in der das erfindungsgemäße Verfahren zum Entschlüsseln einer Datenfolge angewendet wird.

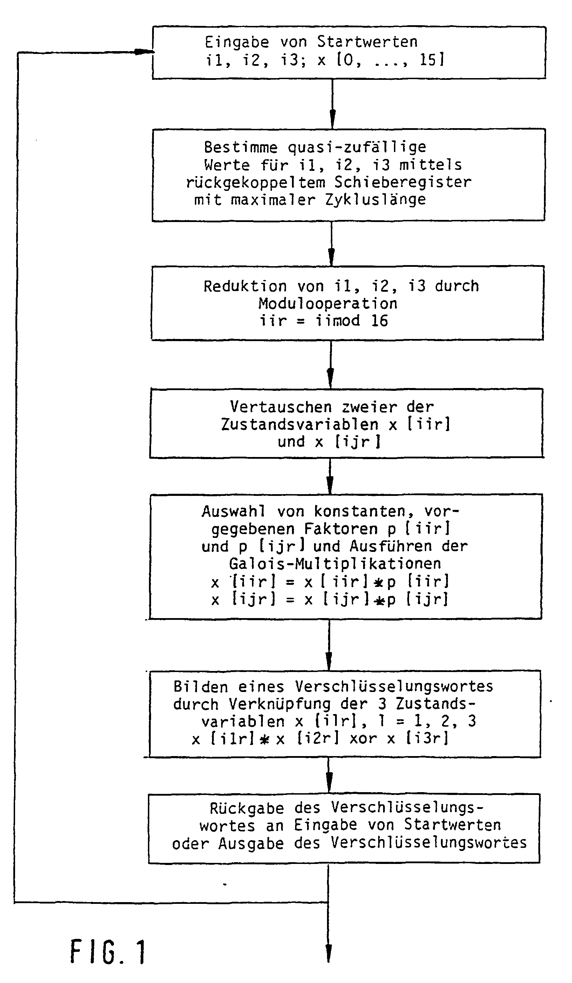

Im folgenden wird anhand der Figur 1 ein Ausführungsbeispiel eines erfindungsgemäßen Algorithmus zum Erzeugen von Verschlüsselungsworten, mit denen eine Datenfolge von aufeinanderfolgenden Datenworten verschlüsselt bzw. entschlüsselt werden kann, erläutert. Der erfindungsgemäße Algorithmus wird in einem endlichen Körper, d.h. in einem Galois-Feld durchgeführt. In dem gezeigten Ausführungsbeispiel basiert der Algorithmus auf 16 Zustandsvariablen x und 16 konstanten, vorgegebenen Faktoren p, die durch drei Indices i adressiert werden. Der Algorithmus wird zyklisch durchlaufen, wobei pro Zyklus ein Verschlüsselungswort erzeugt wird. Die Anzahl der Zustandsvariablen, der konstanten Faktoren und der Indices ist ein Ausführungsbeispiel, und es ist dem Fachmann überlassen, eine geeignete andere Anzahl zu verwenden.

Zunächst werden Startwerte i1, i2, i3 für die Indices und x(0, ..., 15) für die Zustandsvariablen eingegeben. Danach werden quasi zufällig Werte für die Indices i1, i2, i3 dadurch bestimmt, daß die Folge der Indices ein rückgekoppeltes Schieberegister mit maximaler Zykluslänge durchlaufen, welches taktweise weitergeschaltet wird. Aufgrund der Auswahl der Indices mittels des Schieberegisters entsteht eine quasi zufällige Zahlenfolge, die sich bei jedem weiterschalten des Schieberegisters ändert. Diese Operation ist nicht linear und es entsteht dadurch ein quasi zufälliges Rauschen. Im folgenden Schritt wird mittels einer Modulo-Operation im Galois-Feld die Anzahl der Wertebereiche der Indices i1, i2, i3 auf 16-Werte reduziert. Dies ist die Anzahl, die zur Adressierung der Zustandsvariablen x (i) erforderlich ist.

Mittels der reduzierten Indices werden zwei der Zustandsvariablen x(i2r), x(i3r) adressiert und danach miteinander vertauscht, so daß der zufällige Anteil in dem Verfahren erhöht wird. Die so erhaltenen Zustandsvariablen x(i2r), x(i3r) werden über eine Galois-Multiplikation jeweils mit einem konstanten Faktor p(i2r), p(i3r) verknüpft. Hierdurch erfolgt eine fortschreitende Modifikation der Zustandsvariablen, die wesentlich für die statistische Verteilung der Verschlüsselungswerte ist. Die konstanten Faktoren sind vorgegebene Array-Elemente und somit in einem festen Speicherplatz gespeichert. Die konstanten Faktoren p werden durch die Indices iir, die den Zustandsvariablen zugeordnet sind, ausgewählt.

Anschließend wird ein Verschlüsselungswort dadurch gebildet, daß die Zustandsvariablen x(i2r), x(i3r) miteinander und mit einer weiteren Zustandsvariablen x (i1r), die durch einen Index i quasi zufällig ausgewählt wird, verknüpft werden. Das so gebildete Verschlüsselungswort wird an die Station zur Eingabe von Startwerten zurückgegeben, und der Zyklus wird von neuem durchlaufen. Der gesamte Zyklus wird so oft durchlaufen, bis mittels des Schieberegisters alle möglichen Zustände der Indices i1, i2, i3, d.h. alle Zustände der Maximalfolge durchlaufen sind. Wenn alle Zustände durchlaufen sind, ist ein quasi zufälliges Verschlüsselungswort entstanden, welches ausgegeben wird, um ein Datenwort einer Datenfolge zu verschlüsseln oder zu entschlüsseln. Danach wird entsprechend das folgende Verschlüsselungswort durch weiteres Durchlaufen des Algorithmus gebildet. Es entsteht so eine Folge von quasi zufälligen Verschlüsselungsworten, von denen jeweils eines mit einem Datenwort einer Datenfolge verknüpft werden kann. Aufgrund der quasi zufälligen Verwürfelung der Verschlüsselungsworte gewinnt das Verschlüsselungsverfahren eine hohe Sicherheit. Es kann nicht mit vertretbarem Aufwand von dem Ergebnis der verschlüsselten Daten auf den Schlüssel rückgeschlossen werden. Die Rückverfolgung der Entstehung der Datenworte ist in diesem Fall aufwendiger als das Ausprobieren aller möglichen Schlüssel. Auch wenn der Algorithmus oder der Generator, welcher den Algorithmus enthält, bekannt ist, ist der Schlüssel nicht aufgrund der verschlüsselten Daten vorhersagbar. Auch ist bei Kenntnis des Algorithmus die Folge der Verschlüsselungsworte nicht vorhersagbar. Somit erhält das Verfahren eine große Sicherheit gegen Entschlüsselung.

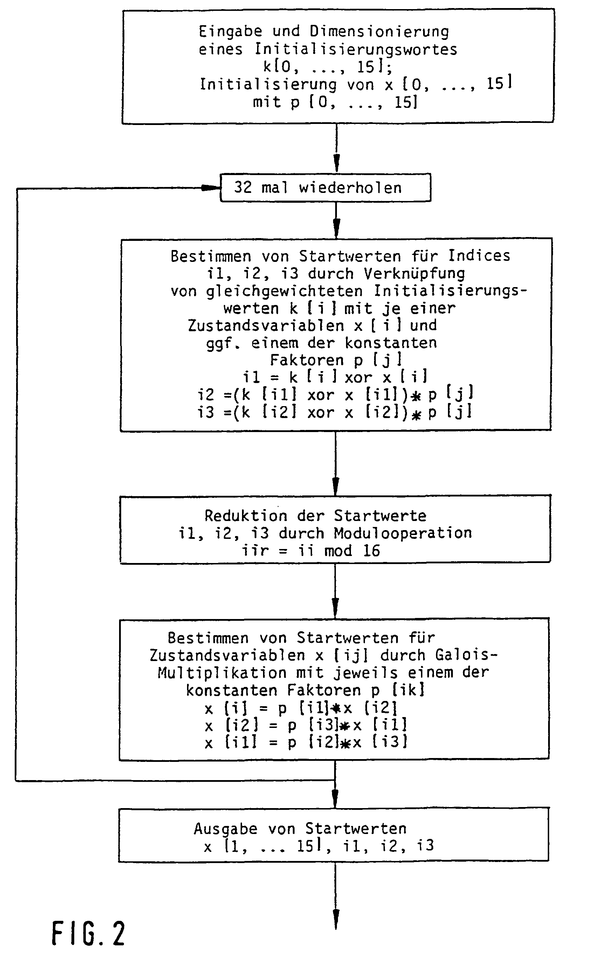

Anhand der Fig. 2 wird im folgenden beschrieben, wie die Startwerte x, i1, i2, i3 für den im Zusammenhang mit der Fig. 1 beschriebenen Algorithmus bestimmt werden. Der Algorithmus des Initialisierungsverfahrens wird in einem endlichen Körper bzw. in einem Galois-Feldfeld mit endlicher Körperarithmetik Galoisoperationen durchgeführt.

Zunächst wird ein Initialisierungswort k eingegeben, das gegebenenfalls auf die Dimension k(0, ..., 15) dimensioniert wird. Dann werden Startwerte für die Indices i1, i2, i3 bestimmt. Zur Bestimmung des Indexes i1 werden jeweils ein zufälliger gewählter Wert der Startwerte k(i) und einer Zustandsvariablen x(i) ausgewählt und miteinander verknüpft. Zur Bestimmung des Indexes i2 werden ein Startwert k(i1) und eine Zustandsvariable x(i1) ausgewählt, miteinander verknüpft und mit einem zufällig ausgewählten konstanten Faktor p(j) verknüpft. Zur Bestimmung des Indexes i3 werden ein Startwert k(i2) und eine Zustandsvariable x(i2) ausgewählt, miteinander verknüpft und mit einem zufällig ausgewählten konstanten Faktor p(k) verknüpft. Die konstanten Faktoren werden aus in einem Speicherplatz vorgegebenen Werten ausgewählt. Es kann sich dabei um die gleichen gespeicherten Werte wie bei dem Algorithmus des Verschlüsselungsverfahren handeln. Danach werden die Startwerte der Indices i1, i2, i3 jeweils durch eine Modulo-Operation auf die für den Algorithmus vorgegebene Anzahl 16 begrenzt. Es ist wesentlich, daß die Initialisierungswerte k gleichgewichtet in die Operationen zur Ermittlung der Startwerte eingehen. Dadurch wird ein statistisches Ungleichgewicht in der Ausgangsverteilung verhindert, welches dazu führen würde, daß auf den Schlüssel des Verfahrens leichter rückgeschlossen werden könnte.

Die Startwerte für die Zustandsvariable x werden dadurch bestimmt, daß jeweils eine Multiplikation eines mittels der Startwerte für die Indices ausgewählten konstanten Faktors p(ii) mit einem zufällig, ebenfalls mittels der Startwerte für die Indices ausgewählten Zustandsvariablen x(ij) im Galois-Feld multipliziert werden. Nachdem das Initialisierungsverfahren durchlaufen ist, werden die Startwerte zur Eingabe an den Algorithmus zum Durchführen des Verschlüsselungsverfahrens ausgegeben.

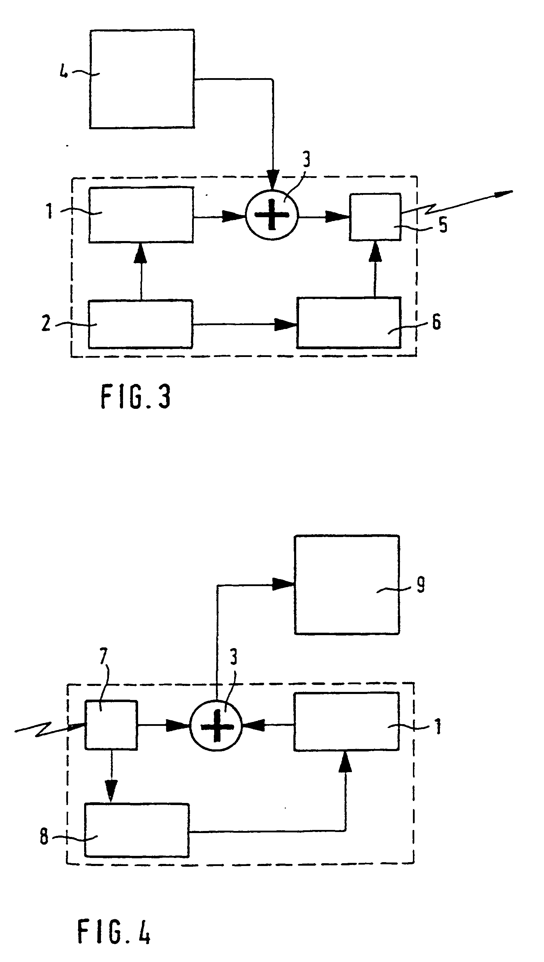

In Fig. 3 ist eine mögliche Anwendung zum Ausführen des erfindungsgemäßen Verfahrens zum Verschlüsseln einer Datenfolge von aufeinanderfolgenden Datenworten gezeigt. In einem Verschlüsselungsfolgengenerator 1 werden sowohl das Initialisierungsverfahren als auch der Algorithmus durchgeführt. In einem Schlüsselgenerator 2 werden Schlüsselworte erzeugt, die an den Verschlüsselungsfolgengenerator 1 geliefert werden. Diese werden als Initialisierungsworte in den Verschlüsselungsfolgengenerator 1 eingegeben. Letzterer liefert eine Folge von Verschlüsselungsworten, die einer Verknüpfungseinheit 3 zugeführt werden. Der Verknüpfungseinheit 3 werden ebenfalls Datenworte aus einer Audiodatenquelle 4 zugeführt. In der Verknüpfungseinheit 3 werden jeweils ein Datenwort und ein Verschlüsselungswort miteinander verknüpft. Hierzu kann eine XOR-Operation durchgeführt werden. Danach werden die verschlüsselten Datenworte an einen Multiplexer 5 geliefert, in welchem ihnen weitere Schlüsseldaten überlagert werden. Letztere werden aus einer Schlüsselverschlüsselungseinheit 6 geliefert, welcher die Schlüsseldaten des Schlüsselgenerators 2 zur weiteren Verschlüsselung zugeführt werden. Der Multiplexer 5 sendet die verschlüsselten Datenworte aus.

Fig. 4 zeigt, wie die von der Sendevorrichtung der Fig.3 verschlüsselten Datenworte empfangen und entschlüsselt werden können. Die Empfangsvorrichtung der Fig. 4 ist im wesentlichen symmetrisch zu der Vorrichtung der Fig. 3 aufgebaut. In einem Demultiplexer 7 werden die Datenworte in die verschlüsselten Schlüsselworte, welche einer Schlüsselentschlüsselungseinheit 8 zugeführt werden, und in die mit den Verschlüsselungsworten verschlüsselten Datenworte, welche der Verknüpfungseinheit 3 zugeführt werden, aufgeteilt. Die Schlüsselentschlüsselungseinheit 8 trennt die verschlüsselten Schlüsselworte aus den ihr zugeführten Daten und gibt sie an den Verschlüsselungsfolgengenerator 1 weiter. In diesem wird das Initialisierungsverfahren und der Algorithmus zum Entschlüsseln der Datenfolge durchlaufen. Der Verschlüsselungsfolgengenerator 1 bestimmt die Verschlüsselungsworte und gibt diese an die Verknüpfungseinheit 3. Dort wird der aus dem Demultiplexer kommende Datenstrom decodiert, und die Datenworte werden an den Audio-Datenempfänger 9 gegeben.

## Patentansprüche

1. Verfahren zum Verschlüsseln bzw. Entschlüsseln einer Datenfolge von aufeinanderfolgenden Datenworten der Länge M in einer Datenübertragungseinrichtung, bei dem ein Algorithmus ausgeführt wird, indem durch Operationen in einem endlichen Körper GF(2^{N}) - mit N>1 - aus vorgegebenen Startwerten eine Folge von quasi-zufälligen Verschlüsselungsworten der Länge M erzeugt wird, und jeweils eines der Verschlüsselungsworte mit einem Datenwort verknüpft wird, wobei der Algorithmus auf einem Galois-Feld von R Zustandsvariablen x und R konstanten, vorgegebenen Faktoren p basiert, die durch L Indices i adressiert werden und wobei L<R ist.

2. Verfahren nach Anspruch 1, **dadurch gekennzeichnet, dass** M=N ist.

3. Verfahren nach einem der vorangehenden Ansprüche, **dadurch gekennzeichnet, dass** der Algorithmus zyklisch durchlaufen wird, wobei pro Zyklus ein Verschlüsselungswort erzeugt wird.

4. Verfahren nach einem der vorangehenden Ansprüche, **dadurch gekennzeichnet, dass** L=3 und 3 Zustandsvariablen x durch die 3 Indices i quasi-zufällig ausgewählt werden, das Verschlüsselungswort durch eine Verknüpfung der ausgewählten Zustandsvariablen x gebildet und nur zur Verknüpfung mit dem jeweiligen Datenwort verwendet wird.

5. Verfahren nach einem der vorangehenden Ansprüche, **dadurch gekennzeichnet, dass** zwei der Zustandsvariablen x **dadurch** ausgewählt werden, dass sie miteinander vertauscht und anschliessend mit durch die Indices i der Zustandsvariablen x(i) von gegebenen konstanten Faktor p(i) multipliziert werden.

6. Verfahren nach einem der vorangehenden Ansprüche, **dadurch gekennzeichnet, dass** sich die Folge der Indices durch Durchlaufen und Weiterschalten eines rückgekoppelten Schieberegisters mit maximaler Zykluslänge ergibt.

7. Verfahren nach einem der vorangehenden Ansprüche, **dadurch gekennzeichnet, dass** die Anzahl der Elemente der Indices i zur Adressierung der Zustandsvariablen x(i) durch eine Modulo-Operation auf die für die Adressierung vorgegebene Anzahl begrenzt werden.

8. Verfahren nach einem der vorangehenden Ansprüche, **dadurch gekennzeichnet, dass** die Startwerte für die Zustandsvariablen x und die Indices i für den Algorithmus mittels eines Initialisierungsverfahrens eindeutig bestimmt werden.

9. Verfahren nach Anspruch 8, **dadurch gekennzeichnet dass** die Startwerte durch Operationen in einem endlichen Körper GF(2<Q>) aus vorgegebenen Initialisierungswerten k quasi-zufällig erzeugt werden.

10. Verfahren nach Anspruch 8 oder 9, **dadurch gekennzeichnet, dass** durch die Initialisierungswerte k gleichgewichtet in die Operationen zur Ermittlung der Startwerte eingehen.

11. Verfahren nach einem der Ansprüche 8 bis 10, **dadurch gekennzeichnet, dass** zum Bestimmen der Startwerte für die Zustandsvariablen x jeweils eine Multiplikation einer Zustandsvariablen x(j) mit einem der konstanten Faktoren p(i) durchgeführt werden.

12. Verfahren nach einem der Ansprüche 8 bis 11, **dadurch gekennzeichnet, dass** die Startwerte der Indices i jeweils durch Verknüpfung von gleichgewichteten Initialisierungswerten k mit einer Zustandsvariablen x bzw. mit einem der konstanten Faktoren p(i) verknüpft werden.

13. Verfahren nach einem der Ansprüche 8 bis 12, **dadurch gekennzeichnet, dass** die Startwerte der Indices jeweils durch eine Modulo-Operation auf die für den Algorithmus vorgegebene Anzahl begrenzt wird.

## Claims

1. A method for encrypting or decrypting a data sequence of successive data words of length M in data communications equipment, during which an algorithm is executed by a sequence of quasi random encryption words of length M being generated by operations in a finite group GF (2^{N}) - with N>1 - from predetermined start values, and in each case one of the encryption words being combined with a data word, whereby the algorithm is based on a Galois field of R state variables x and R constant, predetermined factors p, which are addressed by L indices I and wherein L<R.

2. A method according to Claim 1,
**characterised in that** M=N.

3. A method according to one of the preceding Claims,
**characterised in that** the algorithm is cyclically run through, whereby one encryption word is generated for each cycle.

4. A method according to one of the preceding Claims,
**characterised in that** L=3 and 3 state variables x are selected in a quasi random manner by the three indices i, the encryption word is formed by combining the selected state variables x and is only used for the combination with the respective data word.

5. A method according to one of the preceding Claims,
**characterised in that** two of the state variables x are selected by their being interchanged and subsequently being multiplied with constant factors p(i) given by the indices I of the state variables x(i).

6. A method according to one of the preceding Claims,
**characterised in that** the sequence of the indices is produced by running through and further switching a feedback shift register with maximum cycle length.

7. A method according to one of the preceding Claims,
**characterised in that** the number of elements of the.indices i for addressing the state variables x (i) is limited by a modulo operation to the number predetermined for the addressing.

8. A method according to one of the preceding Claims,
**characterised in that** the start values for the state variables x and the indices i for the algorithm are uniquely determined by means of an initialisation method

9. A method according to Claim 8,
**characterised in that** the start values are generated in a quasi random manner by operations in a finite group GF (2<Q>) from predetermined initialisation values k.

10. A method according to Claim 8 or 9,
**characterised in that** the initialisation values k enter into the operations for determining the start values in equilibrium.

11. A method according to one of Claims 8 to 10,
**characterised in that** to determine the start values for the state variables x, in each case a multiplication of a state variable x (j) with one of the constant factors p (i) is performed.

12. A method according to one of Claims 8 to 11,
**characterised in that** the start values of the indices i are combined in each case by combining constant-weight initialisation values k with a state variable x or with one of the constant factors p(i).

13. A method according to one of Claims 8 to 12,
**characterised in that** the start values of the indices are limited by a modulo operation to the number predetermined for the algorithm.

## Revendications

1. Procédé de chiffrage ou de déchiffrage d'une séquence de données de mots de données, successifs, de longueur M dans un dispositif de transmission de données,
**caractérisé en ce qu'**
un algorithme est réalisé en créant par des opérations dans un corps fini GF (2^{N}) - avec N>1 - à partir de valeurs de départ prédéfinies une séquence de mots de chiffrage quasi aléatoires de longueur M, et chacun des mots de chiffrage est enchaîné à un mot de données, l'algorithme étant basé.sur un champ de Galois de R variables d'état x et R facteurs constants, prédéfinis p; adressés par L indices i avec L<R.

2. Procédé selon la revendication 1,
**caractérisé en ce que**
M = N.

3. Procédé selon l'une quelconque des revendications précédentes,
**caractérisé en ce que**
l'algorithme est parcouru cycliquement, un mot de chiffrage étant créé par cycle.

4. Procédé selon l'une quelconque des revendications précédentes,
**caractérisé en ce que**
L = 3 et 3 variables d'état x sont sélectionnées quasi aléatoirement par les 3 indices i, le mot de chiffrage est formé par un enchaînement des variables d'état x sélectionnées et n'est utilisé que pour l'enchaînement avec le mot de données respectif.

5. Procédé selon l'une quelconque des revendications précédentes,
**caractérisé en ce que**
deux des variables d'état x sont sélectionnées **en ce qu'**elles sont échangées entre elles puis multipliées ensuite par les indices i des variables d'état x (i) du facteur constant donné p(i).

6. Procédé selon l'une quelconque des revendications précédentes,
**caractérisé en ce que**
la suite des indices est obtenue en parcourant et en transférant un registre à décalage rétroactif avec la longueur de cycle maximale.

7. Procédé selon l'une quelconque des revendications précédentes,
**caractérisé en ce que**
le nombre des éléments des indices pour adresser les variables d'état x (i) par une opération modulo est limité au nombre prédéfini pour l'adressage.

8. Procédé selon l'une quelconque des revendications précédentes,
**caractérisé en ce que**
les valeurs de départ pour les variables d'état x et les indices i pour l'algorithme sont clairement détérminés au moyen d'un procédé d'initialisation.

9. Procédé selon la revendication 8,
**caractérisé en ce que**
les valeurs de départ sont créées quasi aléatoirement par des opérations dans un corps fini GF (2<Q>) à partir de valeurs d'initialisation k prédéfinies.

10. Procédé selon la revendication 8 ou 9,
**caractérisé en ce que**
les valeurs d'initialisation k interviennent de manière équilibrée dans les opérations pour déterminer les valeurs de départ.

11. Procédé selon l'une quelconque des revendications 8 à 10,
**caractérisé en ce qu'**
une multiplication d'une variable d'état x (j) par l'un dés facteurs constants p (i) est réalisée pour déterminer les valeurs de départ des variables d'état x.

12. Procédé selon l'une quelconque des revendications 8 à 11,
**caractérisé en ce que**
les valeurs de départ des indices i sont enchaînées par l'enchaînement de valeurs d'initialisation équilibrées k avec une variable d'état x ou avec un des facteurs constants p (i).

13. Procédé selon l'une quelconque des revendications 8 à 12,
**caractérisé en ce que**
les valeurs de départ des indices sont limitées par une opération modulo au nombre prédéfini pour l'algorithme.
